# EUROPÄISCHE PATENTANMELDUNG

(11) **EP 4 778 656 A1**
(43) Veröffentlichungstag der Anmeldung: **22.07.2026**
(21) Anmeldenummer: 26150978.0
(22) Anmeldetag: 09.01.2026
(51) Int. Cl.: B23B 51/00, B23B 51/06

(54) **BOHRWERKZEUG**

(30) Priorität: 21.01.2025 DE 102025102017
(71) Anmelder: Gühring KG, 72458 Albstadt (DE)
(72) Erfinder: Lohr, Markus, 72458 Albstadt (DE); von Puttkamer, Ingo, 72458 Albstadt (DE); Bischoff, Thomas, 72458 Albstadt (DE)
(74) Vertreter: Winter, Brandl - Partnerschaft mbB

(57) **Zusammenfassung**

Bohrwerkzeug (10), insbesondere Tieflochbohrwerkzeug, mit einem Schaft (11), einem ein- oder mehrschneidigen Bohrkopf (12), einem den Schaft mit dem Bohrkopf verbindenden äußeren Rohr (13) zum Abführen von bei einer Bohrbearbeitung eines Werkstücks entstehenden Spänen in Richtung des Schafts, und einem sich im äußeren Rohr vom Schaft zum Bohrkopf erstreckenden inneren Rohr (14) zum Zuführen von Kühlschmiermittel zum Bohrkopf, wobei die Außenumfangsfläche des mittig innerhalb des äußeren Rohrs angeordneten inneren Rohrs mit der Innenumfangsfläche des äußeren Rohrs einen ringförmigen Spanabführraum (41) begrenzt.

## Beschreibung

Die Erfindung betrifft ein Bohrwerkzeug, insbesondere ein Tieflochbohrwerkzeug, mit einer inneren Kühlschmiermittelzufuhr und einer inneren Spanabfuhr.

Ein derartiges Bohrwerkzeug ist aus der DE 2034664 A bekannt. Das vorgeschlagene Bohrwerkzeug weist einen Schaft und einen wenigstens einschneidigen Bohrkopf auf. Der Bohrkopf ist über ein Außenrohr mit dem Schaft verbunden. Im Außenrohr ist ein Innenrohr eingepasst. Das Innenrohr liegt über seine ganze Länge an der Innenumfangsfläche des Außenrohrs an und verstärkt dadurch das Außenrohr.

In einer Ausführungsform bildet das Innenrohr zwei im Querschnitt halbzylindrische Strömungskanäle aus, die durch eine Trennwand voneinander geteilt sind. Einer der Strömungskanäle, der sich durch einen kleineren Strömungsquerschnitt als der andere Strömungskanal auszeichnet, hat die Funktion, einer Werkzeugschneide am Bohrkopf ein Kühlschmiermittel zuzuführen, während der andere Strömungskanal die Funktion hat, bei einer Bohrbearbeitung eines Werkstücks entstehende Späne kühlschmiermittelunterstützt in Richtung des Schafts abzuführen. Die durch die im Querschnitt gerundete Trennwand voneinander getrennten Strömungskanäle verlaufen daher zueinander parallel und, radial gesehen, jeweils außermittig entlang der Innenumfangsfläche des Außenrohrs. Der zum Abtransport der Späne dienende Strömungskanal setzt sich zum Schaft in einem im Schaft angeordneten, seitlich nach außen führenden weiteren Kanal fort. In einer anderen Ausführungsform besitzt das Innenrohr im Hauptteil seines Umfangs eine im Wesentlichen zylindrische Außenform und im übrigen Teil seines Umfangs eine radial nach innen gerichtete Einbuchtung, die sich längs des Innenrohrs erstreckt und eine in axialer Richtung gerade Nut bildet, die mit der Innenumfangsfläche des Außenrohrs den ein Kühlschmiermittel in Richtung Bohrkopf führenden Strömungskanal bildet. Für jede der Ausführungsformen gilt, dass ein über den im Querschnitt kleineren Strömungskanal in einen Durchgangskanal im Bohrkopf geführtes und im Bereich einer Freifläche in ein Bohrloch austretendes Kühlschmiermittel über die wenigstens eine Werkzeugschneide am Bohrkopf in den im Querschnitt größeren Strömungskanal zurück in Richtung Schaft strömt und dabei die bei einer Bohrbearbeitung eines Werkstücks an der wenigstens einen Werkzeugschneide entstehenden Späne mitnimmt.

Ausgehend von der DE 2034664 A hat die Erfindung die Aufgabe, ein einfach herzustellendes Bohrwerkzeug zu schaffen, das sich, insbesondere im Hinblick auf Tieflochbohrungen, durch eine hohe Druck-, Torsions- und Biegefestigkeit sowie eine hohe Rundlaufgenauigkeit auszeichnet.

Diese Aufgabe wird durch ein Bohrwerkzeug mit den Merkmalen des Anspruchs 1 gelöst. Vorteilhafte Weiterbildungen sind Gegenstand abhängiger Ansprüche.

Ein erfindungsgemäßes Bohrwerkzeug, insbesondere Tieflochbohrwerkzeug, weist einen Schaft, einen ein- oder mehrschneidigen Bohrkopf, ein den Schaft mit dem Bohrkopf verbindenden äußeres Rohr und ein sich im äußeren Rohr vom Schaft zum Bohrkopf erstreckendes inneres Rohr auf.

Der Schaft hat die Funktion, das Bohrwerkzeug in einem Werkzeughalter, beispielsweise ein Spannfutter, zu halten. Der Schaft kann zu diesem Zweck beispielsweise einen mit einem Werkzeughalter zu verschraubenden Gewindeabschnitt aufweisen. Alternativ dazu kann der Schaft beispielsweise zum Einspannen in ein Spannfutter zylindrisch oder konisch ausgebildet sein.

Der Bohrkopf hat eine oder mehrere Werkzeugschneiden. Die wenigstens eine Werkzeugschneide kann unmittelbar am Bohrkopf oder an einer vom Bohrkopf getragenen Schneidplatte ausgebildet sein. Der Bohrkopf kann demnach monolithisch ausgeführt oder aus einem Bohrkopfkörper und wenigstens einer am Bohrkopfkörper befestigten Schneidplatte modular zusammengesetzt sein. Der Bohrkopf weist vorzugsweise je Werkzeugschneide eine zugeordnete Spannut auf. Die Spannut kann geradlinig oder wendelförmig verlaufen. Der Bohrkopf kann des Weiteren ein innenliegendes Kühlschmiermittelverteilsystem aufweisen, das von einer an das innere Rohr anschließenden Eintrittsöffnung zu einer der wenigstens einen Werkzeugschneide zugeordneten Austrittsöffnung führt. Die der Werkzeugschneide zugeordnete Austrittsöffnung kann, in Werkzeugdreh- bzw. Schnittrichtung gesehen, hinter der Werkzeugschneide, beispielsweise im Bereich einer an die Werkzeugschneide angrenzenden Freifläche liegen.

Das äußere Rohr verbindet den Bohrkopf axial und drehmomentübertragend mit dem Schaft. Das äußere Rohr kann dazu form- und/oder stoffschlüssig, vorzugsweise durch Verlötung, mit dem Schaft und dem Bohrkopf verbunden sein. Das im äußeren Rohr mittig angeordnete innere Rohr erstreckt sich, vorzugsweise geradlinig, im äußeren Rohr vom Schaft zum Bohrkopf. Während das innere Rohr die Funktion hat, Kühlschmiermittel zum Bohrkopf zu führen, hat das äußere Rohr die Funktion, die bei einer Bohrbearbeitung eines Werkstücks entstehenden an der wenigstens einen Werkzeugschneide entstehenden Späne am Bohrkopf über den ringförmigen Raum zwischen der Innenumfangsfläche des äußeren Rohrs und der Außenumfangsfläche des inneren Rohrs in Richtung des Schafts abzuführen. Das äußere Rohr fungiert daher zumindest bis zu einer später erläuterten Spanaustrittsöffnung als eine Abschirmung, die einen Spanaustritt aus dem Bohrwerkzeug in die Umgebung verhindert. Im Sinne eines möglichst gleichbleibenden Spanabfuhrquerschnitts ist das innere Rohr vorzugsweise koaxial und konzentrisch zum äußeren Rohr in letzterem angeordnet.

Das äußere Rohr und das innere Rohr sind vorzugsweise aus Stahlrohren mit kreiszylindrischem Querschnitt hergestellt.

Der Form- und/oder Stoffschluss des Bohrkopfs und des Schafts mit dem äußeren Rohr und dem inneren Rohr ermöglicht eine zuverlässige steife Verbindung, die die für eine Bohrbearbeitung, insbesondere eine Tiefbohrbearbeitung, erforderliche Druck-, Torsions- und Biegefestigkeit gewährleistet. Aufgrund der mittigen Anordnung des inneren Rohrs im äußeren Rohr lassen sich Massenunwuchten gering halten, wodurch eine hohe Rundlaufgenauigkeit erreicht wird. Zudem lässt sich das Bohrwerkzeug einfach herstellen, weil dank der Verwendung von kreiszylindrischen Rohren keine aufwändigen Umformungen des inneren Rohrs erforderlich sind.

Zum Bohren ins Volle kann der er Bohrkopf stirn- und umfangsschneidend ausgebildet sein, d.h. wenigstens eine stirnseitig liegende Hauptschneide und wenigstens eine umfangsschneidende Nebenschneide aufweisen.

Zur Abfuhr der bei einer Bohrbearbeitung eines Werkstücks am Bohrkopf entstehenden Späne kann der Bohrkopf wenigstens eine, vorzugsweise wendelförmig verlaufende, Spannut aufweisen, die sich in Richtung des Schafts im äußeren Rohr fortsetzt. Im Sinne einer optimalen Überführung der Späne von der wenigstens einen Schneide kann das äußere Rohr an seinem bohrkopfseitigen Endabschnitt je Spannut einen axialen Fortsatz aufweisen, der sich in die Spannut hinein erstreckt und die wenigstens eine Spannut im Erstreckungsbereich des axialen Fortsatzes radial nach außen schließt.

Zur Verbindung des Bohrkopfs mit dem äußeren Rohr kann ein durchmesserreduzierter schaftseitiger Endabschnitt des Bohrkopfs in einem bohrkopfseitigen Endabschnitt des äußeren Rohrs bündig aufgenommen sein.

Gleichermaßen kann ein durchmesserreduzierter bohrkopfseitiger Endabschnitt des Schafts in einem schaftseitigen Endabschnitt des äußeren Rohrs bündig aufgenommen sein.

Des Weiteren kann das äußere Rohr in einem an den bohrkopfseitigen Endabschnitt des Schafts angrenzenden Endabschnitt wenigstens eine Spanauswurföffnung aufweisen.

Um stumpfe Prallflächen zu vermeiden, kann der durchmesserreduzierte bohrkopfseitige Endabschnitt des Schafts zum Bohrkopf hin einen beispielsweise keilförmigen oder konischen Vorsprung aufweisen, der sich axial bis in den Bereich der wenigstens einen Spanauswurföffnung hinein erstreckt. Der Vorsprung hat die Funktion, in Richtung Schaft transportierte Späne nach außen zu der wenigstens einen Spanauswurföffnung hin umzulenken.

Nachfolgend wird mit Hilfe der Zeichnungen eine bevorzugte Ausführungsform eines aus einem Schaft, einem Bohrkopf, einem inneren Rohr und einem äußeren Rohr zusammengesetzten Bohrwerkzeugs erläutert. In den Zeichnungen zeigt:
Fig. 1 eine Seitenansicht eines Bohrwerkzeugs;
Fig. 2 eine Seitenansicht des Bohrwerkzeugs aus Fig. 1, wobei ein äußeres Rohr transparent dargestellt ist;
Fig. 3 eine Seitenansicht des Bohrwerkzeugs, in der das äußere Rohr fehlt;

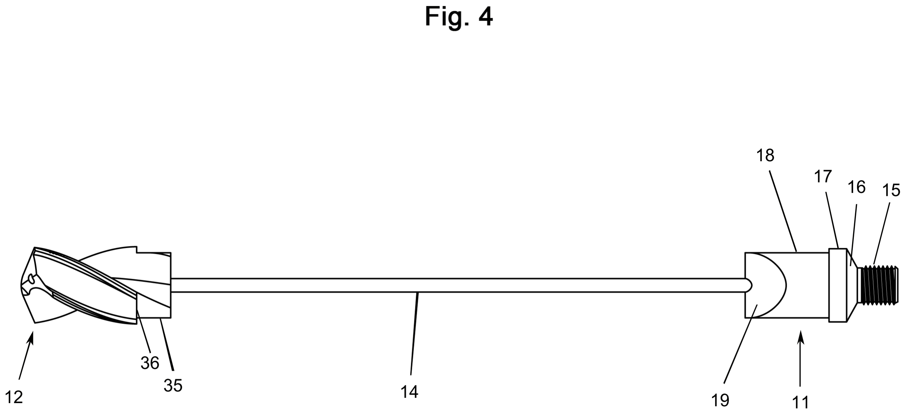

Fig. 4 eine im Vergleich zu Fig. 3 um die Werkzeugachse verdrehte Seitenansicht;
Fig. 5 eine Seitenansicht eines Bohrkopfs;
Fig. 6 eine im Vergleich zu Fig. 5 verdrehte Seitenansicht, in der ein Kühlschmiermittelverteilsystem gestrichelt dargestellt ist;
Fig. 7 eine perspektivische Ansicht der Verbindungsstelle des Bohrkopfs mit dem äußeren Rohr, das zum Verständnis der Verbindungsstelle transparent dargestellt ist; und
Fig. 8 eine perspektivische Ansicht der Verbindungsstelle eines Schafts mit dem äußeren Rohr, das zum Verständnis der Verbindungsstelle transparent dargestellt ist.

### Bevorzugte Ausführungsform

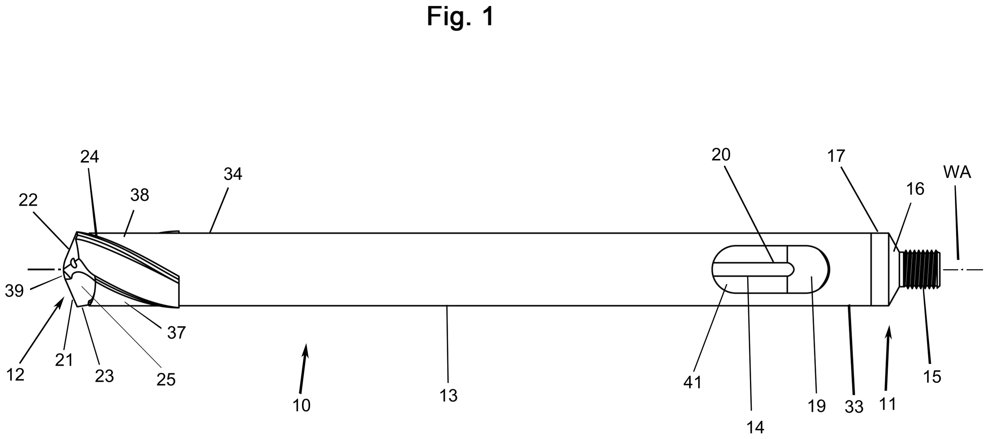

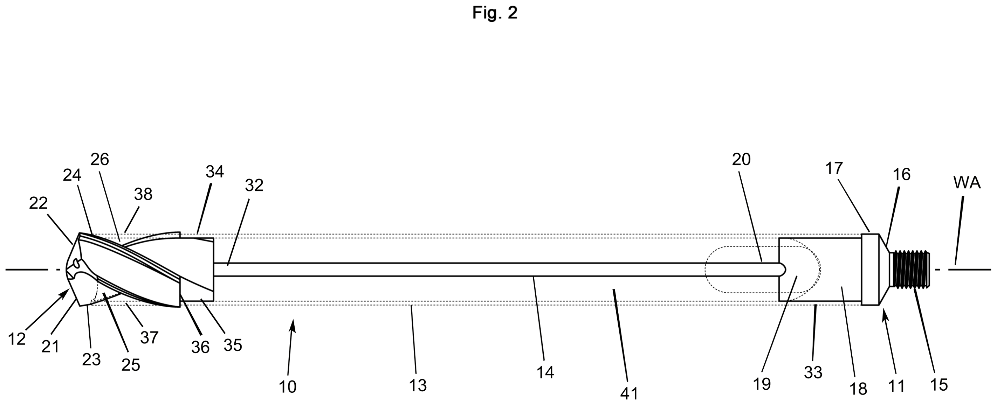

Fig. 1 und Fig. 2 zeigen ein sich entlang einer Werkzeugachse WA erstreckendes Bohrwerkzeug 10 mit einem Schaft 11, einem zweischneidigen Bohrkopf 12, einem den Schaft 11 mit dem Bohrkopf 12 verbindenden äußeren Rohr 13 und einem sich im äußeren Rohr 13 vom Schaft 11 zum Bohrkopf 12 erstreckenden inneren Rohr 14.

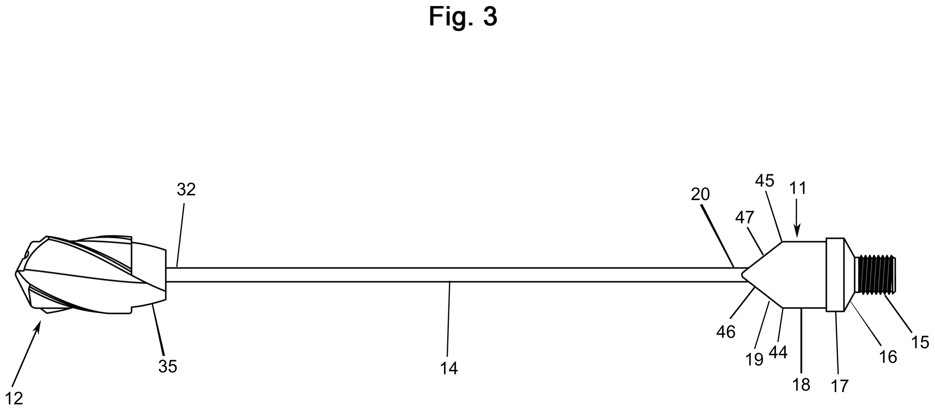

Der vorzugsweise aus einem Werkzeugstahl hergestellte Schaft 11 hat die Funktion, das Bohrwerkzeug 10 in einem (nicht gezeigten) Werkzeughalter zu halten. In der gezeigten Ausführungsform weist der Schaft 11 zu diesem Zweck an seinem in Fig. 1 und Fig. 2 rechten Endabschnitt einen mit dem (nicht gezeigten) Werkzeughalter zu verschraubenden Gewindeabschnitt 15 auf. An den Gewindeabschnitt 15 schließt sich zum Bohrkopf 12 hin über eine kegelstumpfförmigen Übergangsabschnitt 16 ein Bund 17 an, der einen axialen Anschlag für das äußere Rohr 13 bildet. Ein im Vergleich zum Bund 17 im Durchmesser reduzierter Verbindungsabschnitt 18 des Schafts 13 weist an seinem in Fig. 1 und Fig. 2 linken Ende eine in Fig. 3 zu sehende keilförmige Verjüngung 19 auf. An der zum Bohrkopf 12 hin zeigenden Spitze der keilförmigen Verjüngung 19 ist eine - nicht näher dargestellte - Aufnahmeöffnung ausgebildet, in der im Sinne einer in Dreh- und Axialrichtung festen und kühlschmiermitteldichten Verbindung ein schaftseitiger Endabschnitt 20 des inneren Rohrs 14 formschlüssig aufgenommen und mit dem Schaft 11 verlötet ist.

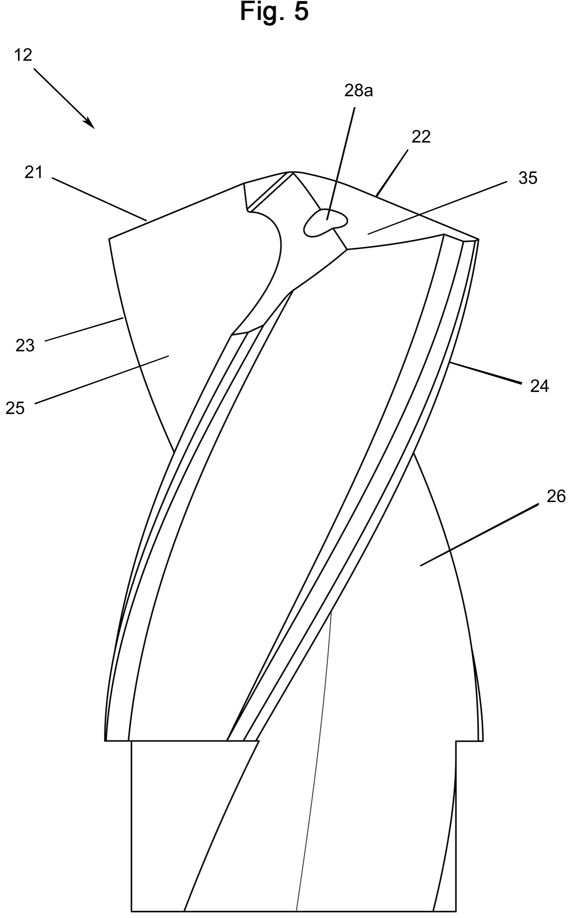

In der gezeigten Ausführungsform weist der vorzugsweise aus einem Hartmetallkörper geschliffene Bohrkopf 12, wie in Fig. 5 gezeigt, zum Bohren ins Volle zwei stirnseitige Hauptschneiden 21, 22 auf, an die sich in Richtung des Schafts 11 zwei umfangsschneidende Nebenschneiden 23, 24 anschließen. Die Schneiden 21 bis 24 sind unmittelbar in den Bohrkopf 12 eingeschliffen. Der Bohrkopf 12 weist zudem zwei wendelförmig verlaufende Spannuten 25, 26 auf. Der Bohrkopf 12 ist demnach monolithisch ausgeführt.

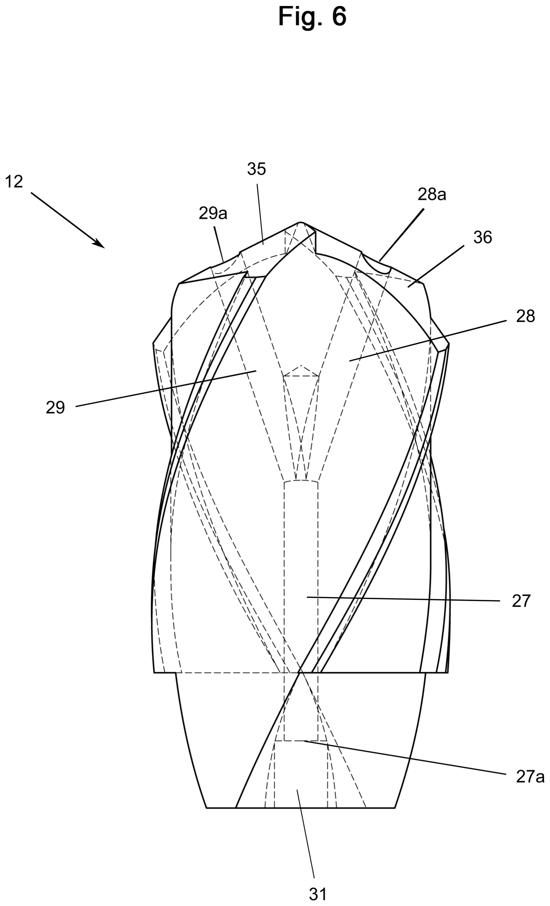

Fig. 6 lässt des Weiteren ein im Bohrkopf 12 ausgebildetes Kühlschmiermittelverteilsystem erkennen, das aus einen mittigen Hauptkanal 27 und vom Hauptkanal 27 abzweigenden Zweigkanälen 28, 29 aufweist. Eine Eintrittsöffnung 27a des Hauptkanals 27 grenzt an eine im Bohrkopf 12 mittig ausgebildete axiale Aufnahmeöffnung 31 an, in der ein bohrkopfseitiger Endabschnitt 32 des inneren Rohrs 14 formschlüssig aufgenommen ist. Im Sinne einer in Dreh- und Axialrichtung festen und kühlschmiermitteldichten Verbindung ist der Endabschnitt 32 des inneren Rohrs 14 im Bereich der Aufnahmeöffnung 31 mit dem Bohrkopf 12 verlötet. Austrittsöffnungen 28a, 29a der Zweigkanäle 28, 29 liegen, in Werkzeugdreh- bzw. Schnittrichtung gesehen, im Bereich der hinter den Hauptschneiden 21, 22 liegenden Freiflächen 35, 36.

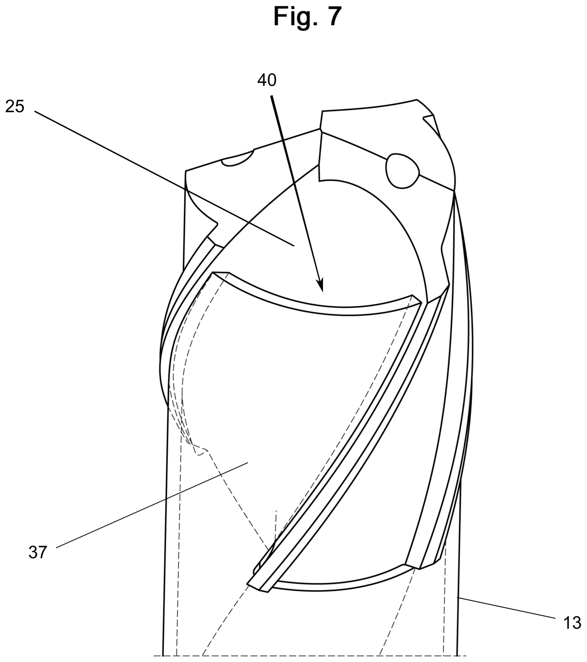

Wie das innere Rohr 14 verbindet auch das in Fig. 2 und Fig. 7 transparent dargestellte äußere Rohr 13, das das innere Rohr 14 konzentrisch umgibt, den Bohrkopf 12 axial und drehmomentübertragend mit dem Schaft 11. Zu diesem Zweck ist der durchmesserreduzierte Verbindungsabschnitt 18 mit der keilförmigen Verjüngung 19 formschlüssig im schaftseitigen Endabschnitt 33 des gegen den Bund 17 anliegenden äußeren Rohrs 13 aufgenommen. Im Sinne einer in Dreh- und Axialrichtung festen Verbindung ist der schaftseitige Endabschnitt 33 des äußeren Rohrs 13 mit dem Schaft 11 verlötet. An seinem bohrkopfseitigen Endabschnitt 34 nimmt das äußere Rohr 13 einen durchmesserreduzierten Endabschnitt 35 des Bohrkopfs 12 formschlüssig auf. Wie die Fig. 2 zeigt, liegt das äußere Rohr 13 an einer Stufe 36 am Ende des durchmesserreduzierten Endabschnitts 35 des Bohrkopfs 12 an. Im Sinne einer in Dreh- und Axialrichtung festen Verbindung ist der bohrkopfseitige Endabschnitt 34 des äußeren Rohrs 13 mit dem Bohrkopf 12 stoffschlüssig verlötet.

Das innere Rohr 14 und das äußere Rohr 13 sind vorzugsweise jeweils aus Stahlrohren mit kreiszylindrischem Querschnitt hergestellt.

Fig. 2 und Fig. 7 zeigen, dass der Außendurchmesser des äußeren Rohrs 13 einen kleineren Durchmesser aufweist als der Nenndurchmesser des Bohrwerkzeugs 10.

Des Weiteren zeigen Fig. 1, Fig. 2 und Fig. 7, dass vom bohrkopfseitigen Endabschnitt 34 des äußeren Rohrs 13 aus in Richtung Werkzeugspitze 39 ragende fingerartige Fortsätze 37, 38 bis zu kurz vor den Schneidenecken in die Spannuten 25, 26 eingreifen. Fig. 1 und Fig. 7 zeigen die dem Verlauf der Spannnuten 25, 26 entsprechende wendelförmige Erstreckung der fingerartigen Fortsätze 37, 38. Die fingerartigen Fortsätze 37, 38 liegen, in Umfangsrichtung gesehen, über ihre Länge bündig an der die jeweilige Spannut 25, 26 bilden Wandung im Bohrkopf 12 an, so dass die Spannuten 25, 26 im Erstreckungsbereich der axialen Fortsätze 37, 38 radial nach außen geschlossen sind, wodurch nach außen abgeschirmte Spanabfuhrkanäle geschaffen sind. Fig. 7 zeigt die Eintrittsöffnung 40 eines der jeweils durch einen fingerartigen Fortsatz 37, 38 nach außen abgeschirmten Spanabfuhrkanäle, die, wie Fig. 1 erkennen lässt, in den durch das innere Rohr 14 und das äußere Rohr 13 begrenzten ringförmigen Spanabfuhrraum 41 münden.

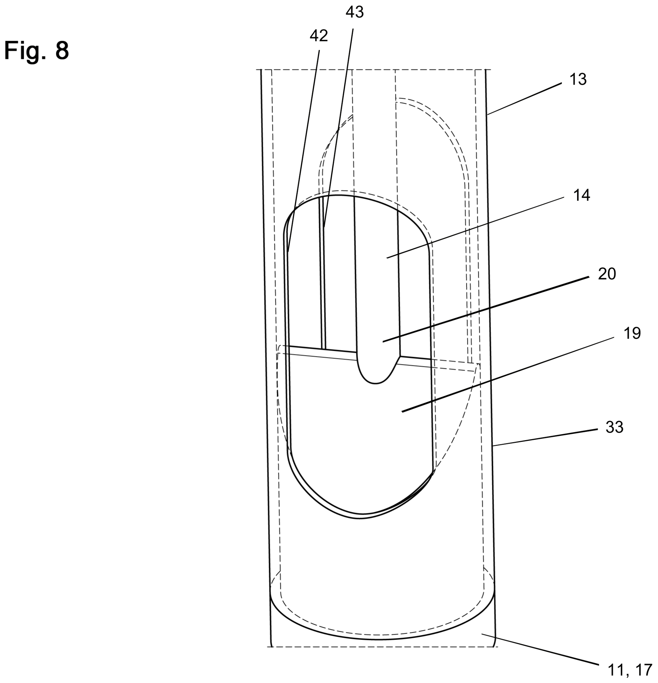

Fig. 1 und Fig. 8 zeigen im schaftseitigen Endabschnitt 33 des äußeren Rohrs 13 ausgebildete Spanauswurföffnungen 42, 43. Der keilförmige Vorsprung 19 am bohrkopfseitigen Ende des Verbindungsabschnitts 18 des Schafts 11 erstreckt sich axial bis in den Bereich zwischen den diametral gegenüberliegenden Spanauswurföffnungen 42, 43 hinein. Zum Schaft 11 hin enden die Spanauswurföffnungen 42, 43 an den Rändern 44, 45 der zum Schaft 11 hin auslaufenden Seitenflächen 46, 47 des keilförmigen verjüngten Vorsprungs 19.

## Patentansprüche

1. Bohrwerkzeug (10), insbesondere Tieflochbohrwerkzeug, mit einem Schaft (11), einem ein- oder mehrschneidigen Bohrkopf (12), einem den Schaft (11) mit dem Bohrkopf (12) verbindenden äußeren Rohr (13) zum Abführen von bei einer Bohrbearbeitung eines Werkstücks entstehenden Spänen in Richtung des Schafts (11), und einem sich im äußeren Rohr (13) vom Schaft (11) zum Bohrkopf (12) erstreckenden inneren Rohr (14) zum Zuführen von Kühlschmiermittel zum Bohrkopf (12), **dadurch gekennzeichnet, dass**
die Außenumfangsfläche des mittig innerhalb des äußeren Rohrs (13) angeordneten inneren Rohrs (14) mit der Innenumfangsfläche des äußeren Rohrs (13) einen ringförmigen Spanabführraum (41) begrenzt.

2. Bohrwerkzeug (10) nach Anspruch 1, **gekennzeichnet durch** ein im Bohrkopf (12) ausgebildetes Kühlschmiermittelverteilsystem mit einer an das innere Rohr (14) anschließenden Eintrittsöffnung (27a) und stirnseitigen Austrittsöffnungen (28a, 29a).

3. Bohrwerkzeug (10) nach Anspruch 1 oder 2, **dadurch gekennzeichnet, dass** der Bohrkopf (12) zum Bohren ins Volle stirn- und umfangsschneidend ausgebildet ist.

4. Bohrwerkzeug (10) nach Anspruch 3, **dadurch gekennzeichnet, dass**
der Bohrkopf (12) wenigstens eine, vorzugsweise wendelförmig verlaufende, Spannut (25, 26) aufweist, und
das äußere Rohr (13) sich an seinem bohrkopfseitigen Endabschnitt (34) über einen axialen Fortsatz (37, 38) in die wenigstens eine Spannut (25, 26) hinein erstreckt und die wenigstens eine Spannut (25, 26) im Erstreckungsbereich des Fortsatzes (37, 38) radial nach außen schließt.

5. Bohrwerkzeug (10) nach einem der vorhergehenden Ansprüche, **dadurch gekennzeichnet, dass** ein durchmesserreduzierter schaftseitiger Endabschnitt (35) des Bohrkopfs (12) in einem bohrkopfseitigen Endabschnitt (34) des äußeren Rohrs (13) bündig aufgenommen ist.

6. Bohrwerkzeug (10) nach einem der vorhergehenden Ansprüche, **dadurch gekennzeichnet, dass** ein durchmesserreduzierter bohrkopfseitiger Verbindungsabschnitt (18) des Schafts (11) in einem schaftseitigen Endabschnitt (33) des äußeren Rohrs (13) bündig aufgenommen ist.

7. Bohrwerkzeug (10) nach Anspruch 6, **dadurch gekennzeichnet, dass** das äußere Rohr (13) an den Verbindungsabschnitt (18) des Schafts (11) angrenzend wenigstens eine Spanauswurföffnung (42, 43) aufweist.

8. Bohrwerkzeug (10) nach Anspruch 7, **dadurch gekennzeichnet, dass** der Verbindungsabschnitt (18) des Schafts (11) zum Bohrkopf (12) hin einen keilförmig verjüngten Vorsprung (19) aufweist, der sich axial bis in den Bereich der wenigstens einen Spanauswurföffnung (42, 43) hinein erstreckt.

9. Bohrwerkzeug (10) nach einem der vorhergehenden Ansprüche, **dadurch gekennzeichnet, dass** der Bohrkopf (12) aus Hartmetall besteht.

10. Bohrwerkzeug (10) nach einem der vorhergehenden Ansprüche, **gekennzeichnet durch** einen zweischneidigen Bohrkopf (12) mit wendelförmig verlaufenden Spannuten (25, 26).

11. Bohrwerkzeug (10) nach einem der vorhergehenden Ansprüche, **dadurch gekennzeichnet, dass** das äußere Rohr (13) und das innere Rohr (14) mit dem Schaft (11) und dem Bohrkopf (12) form- und/oder stoffschlüssig verbunden sind.
